# EUROPÄISCHE PATENTANMELDUNG

(11) **EP 2 460 678 A1**
(43) Veröffentlichungstag der Anmeldung: **06.06.2012**
(21) Anmeldenummer: 09007448.5
(22) Anmeldetag: 05.06.2009
(51) Int. Cl.: B60J 5/10

(54) **Heckklappe für ein Kraftfahrzeug**

(30) Priorität: 16.07.2008 DE 102008032846
(71) Anmelder: Wilhelm Karmann GmbH, 49084 Osnabrück (DE)
(72) Erfinder: Meinert, Stefan, 49134 Wallenhorst (DE)
(74) Vertreter: Kronthaler, Schmidt & Coll.

(57) **Zusammenfassung**

Heckklappe (1) für ein Kraftfahrzeug (2), die horizontal geteilt ist und wenigstens ein oberes (3) und ein unteres (4) Klappenteil aufweist, die im geschlossenen Zustand aneinander angrenzen, wobei jedes der Klappenteile mittelbar oder unmittelbar schwenkbar an dem Kraftfahrzeug gehalten ist und jeweils um eine horizontale Schwenkachse (5,6) relativ zum Kraftfahrzeug verlagerbar ist, wobei die Klappenteile gleichsinnig verlagerbar sind, wobei die Klappenteile in geöffneter Position nahezu parallel zueinander positioniert sind, wobei die Klappenteile derart gekoppelt sind, dass eine Bewegung eines Klappenteils die Bewegung aller Klappenteile bewirkt und wobei die Koppelung zwischen den Klappenteilen wenigstens einen starren Verbindungslenker (7) umfasst, der wenigstens zwei Klappenteile mittelbar oder unmittelbar gelenkig verbindet

## Beschreibung

Die Erfindung betrifft eine Heckklappe für ein Kraftfahrzeug.

Es sind Heckklappen bekannt, die über ein einfaches Scharnier bzw. ein Eingelenk mit dem Kraftfahrzeug verbunden sind. In der Regel ist zur Kraftunterstützung und zum Halten der Heckklappe in der geöffneten Position eine Gasdruckfeder vorgesehen. Ebenfalls bekannt sind Heckklappen, die automatisiert - mittels eines Antriebs - geöffnet und geschlossen werden können. Bekannt sind zudem Heckdeckel, die mit einem Mehrgelenk an dem Kraftfahrzeug angebunden sind, um eine gewünschte Bewegungskurve während der Öffnungsbewegung zu durchlaufen. Bezüglich der Ausrichtung und der Größe der Heckklappe sind nahezu senkrechte Heckklappen bei Vans oder Kombifahrzeugen ebenso bekannt wir besonders lange, schräg liegende Heckdeckel bei Coupés.

Häufig besteht das Problem, dass eine Heckklappe im geöffneten Zustand soweit aufgeschwenkt ist, dass eine untere Abschlusskante oberhalb der Dachlinie des Fahrzeugs liegt. Dies kann insbesondere bei Fahrzeugen mit großen Heckklappen (zum Beispiel bei Vans oder Coupés) dazu führen, dass beispielsweise in Tiefgaragen ein Aufschwenken der Heckklappe nicht möglich ist, ohne die Decke zu berühren.

Ein weiteres Problem kann darin bestehen, dass senkrecht angeordnete Heckklappen (zum Beispiel bei Vans oder bei Kombifahrzeugen) einen Schwenkbereich aufweisen, der sich deutlich bis hinter das Fahrzeug erstreckt. Dies kann dazu führen, dass die Heckklappe bei beengten Platzverhältnissen nicht oder nicht vollständig geöffnet werden kann.

Der Erfindung liegt die Aufgabe zu Grunde, eine Heckklappe für ein Kraftfahrzeug dahingehend zu verbessern, dass auch bei beengten Platzverhältnissen sowohl über wie auch hinter dem Kraftfahrzeug eine Öffnung der Heckklappe möglich ist.

Die Aufgabe wird mit den Merkmalen des Patentanspruchs 1 gelöst. Vorteilhafte Weiterbildungen ergeben sich aus den abhängigen Ansprüchen.

Eine erfindungsgemäße Heckklappe für ein Kraftfahrzeug, die horizontal geteilt ist, weist wenigstens ein oberes und ein unteres Klappenteil auf, die im geschlossenen Zustand aneinander angrenzen. Hierbei ist jedes der Klappenteile mittelbar oder unmittelbar schwenkbar an dem Kraftfahrzeug gehalten und ist jeweils um eine horizontale Schwenkachse relativ zum Kraftfahrzeug verlagerbar. Die Klappenteile sind gleichsinnig verlagerbar, wobei die Klappenteile in geöffneter Position nahezu parallel zueinander positioniert sind. Die Klappenteile sind erfindungsgemäß derart gekoppelt, dass eine Bewegung eines Klappenteils die Bewegung aller Klappenteile bewirkt, wobei die Koppelung zwischen den Klappenteilen wenigstens einen starren Verbindungslenker umfasst, der wenigstens zwei Klappenteile mittelbar oder unmittelbar gelenkig verbindet.

Die sich hieraus gegenüber dem Stand der Technik ergebenden Vorteile sind erheblich: Durch die Teilung der Heckklappe in wenigstens zwei Klappenteile kann die resultierende Länge des geöffneten Klappenpakets deutlich reduziert werden. Insbesondere durch die nahezu parallele Endlage in geöffnetem Zustand ergibt sich auch eine geringe Höhe des Klappenpakets. Aufgrund der Koppelung von wenigstens zwei Klappenelementen mit einem starren Verbindungslenker ergibt sich eine einfache Bedienbarkeit, wobei die Klappenelemente besonders sicher und stabil zwangsgeführt werden. Die erfindungsgemäße Heckklappe ist zudem sehr robust, da sich durch die mittelbare oder unmittelbare schwenkbare Anbindung am Kraftfahrzeug eine sehr einfache und stabile Kinematik ergibt. Es wird also ganz bewusst auf komplizierte Mehrgelenklösungen verzichtet.

Die erfindungsgemäße Heckklappe kann eine Mehrzahl von Klappenteilen aufweisen, wobei die bevorzugte Weiterbildung der Heckklappe aus genau zwei nahezu senkrecht angeordneten Klappenteilen besteht. Die Anzahl von zwei Klappenteilen hat sich als ausreichend herausgestellt um die wesentlichen, zuvor genannten, Vorteile gegenüber dem Stand der Technik zu erzielen.

Die bevorzugte Ausgestaltung der Heckklappe sieht vor, dass zwei Klappenteile unmittelbar (also direkt, zum Beispiel über ein einfaches Gelenk oder Scharnier) oder mittelbar über einen starr mit dem jeweiligen Klappenteil verbundenen Schwenklenker gelenkig am Kraftfahrzeug gelagert sind. Insbesondere wird für das obere Klappenteil eine unmittelbare Anbindung und für das untere Klappenteil eine Anbindung über einen starr mit dem Klappenteil verbundenen Schwenklenker an dem Kraftfahrzeug vorgesehen, wobei der Verbindungslenker das obere Klappenteil mit dem Schwenklenker des unteren Klappenteils gelenkig koppelt. Durch diese erfindungsgemäße Ausgestaltung wird eine Bewegung der Klappenteile erzielt, die in geöffneter Stellung eine besonders kompakte Parallellage der Klappenteile bewirkt, wobei sich die Klappenteile zu einem sehr großen Teil überdecken. Dies resultiert aus einem besonders kleinen Hebelarm des oberen Klappenteils und aus einem besonders großen Hebelarm des unteren Klappenteils, was im Ergebnis dazu führt, dass die Hebelarme die Klappenteile im geöffneten Klappenzustand in die zuvor beschrieben Lage bringen. Durch den starren Verbindungslenker wird eine sichere, gemeinsame Bewegung der Klappenteile erzielt, die einerseits eine sehr enge Parallellage in geöffnetem Zustand und eine sichere Kollisionsvermeidung andererseits bewirkt.

Die bevorzugte konstruktive Variante der Heckklappe zeichnet sich durch einen Schwenklenker aus, der in Richtung seiner Längserstreckung wenigstens eine Knickstelle aufweist. In dieser Knickstelle greift der Verbindungslenker an. Wenn zudem der Anlenkpunkt des Schwenklenkers am Kraftfahrzeug in Fahrtrichtung vor dem Anlenkpunkt des unmittelbar am Kraftfahrzeug angelenkten Klappenteils angeordnet ist, ergibt sich eine Bewegung der Klappenteile besonders dicht hinter dem Fahrzeug. Dies ist bei engen Platzverhältnissen hinter dem Fahrzeug von großem Vorteil.

Bei engen Platzverhältnissen in vertikaler Richtung, also oberhalb des Fahrzeugs, wird die Heckklappe erfindungsgemäß so dimensioniert, dass die Klappenteile in der geöffneten Position eine nahezu horizontale Stellung in Höhe einer oberen Begrenzung des Kraftfahrzeugs einnehmen. Damit befinden sich die Klappenteile auch in geöffnetem Zustand der Heckklappe nicht wesentlich oberhalb des Fahrzeugs, was besonders in Tiefgaragen von großem praktischen Nutzen ist.

Eine weitere bevorzugte Ausgestaltung der Heckklappe sieht vor, dass am untersten Klappenelement eine Betätigungsvorrichtung vorgesehen ist, mittels der alle Klappenelemente gleichzeitig öffnenbar und/oder schließbar sind. In Kombination mit einer Kraftunterstützung der Heckklappe in Form einer Gasdruckfeder und/oder ein Antriebselementes ergibt sich eine einfache und ergonomische Bedienung der Heckklappe. Die Rundumsicht bleibt erhalten, wenn das obere Klappenteil der Heckklappe eine Scheibe aufweist.

Die Erfindung wird im folgenden an Hand eines Ausführungsbeispiels beschrieben, das eine Steilheckvariante eines vanartigen Fahrzeugs zeigt. Es wird an dieser Stelle ausdrücklich darauf hingewiesen, dass die Erfindung nicht auf die gezeigte Heckklappe beschränkt ist, sondern vom Fachmann bei jeder beliebigen Heckklappe angewendet werden kann, bei der sich auf Grund der Größe oder Geometrie der Bedarf einer Aufteilung in wenigstens zwei Klappenteile ergibt.

Die Figuren zeigen im einzelnen:
- Figur 1: zeigt die geschlossene Stellung der Heckklappe,
- Figur 2: zeigt eine teilgeöffnete Stellung der Heckklappe und
- Figur 3: zeigt die vollständig geöffnete Stellung der Heck- klappe.

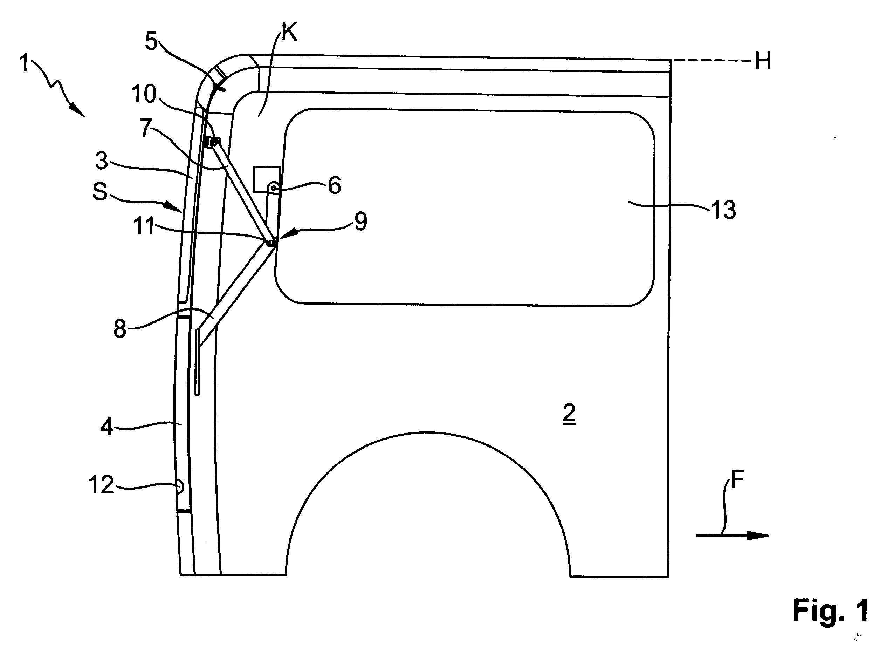

Figur 1 zeigt ein hinteres Teil eines vanartigen Fahrzeugs 2, bei dem eine Heckklappe 1 nahezu senkrecht angeordnet ist, die aus zwei Klappenteilen 3 und 4 besteht. Mit F ist die Fahrtrichtung des Fahrzeugs angedeutet. Der Rest des Fahrzeugs 2 (vorderer Karosserieteil, Reifen, etc.) ist in den Figuren nicht gezeigt, da diese Teile des Fahrzeugs 2 nicht wesentlich für die vorliegende Erfindung sind. Das Fahrzeug 2 weist eine Seitenscheibe 13 sowie eine in dem oberen Klappenteil 3 angeordnete Heckscheibe S auf. Durch die im wesentlichen gleich großen Dimensionierung der beiden Klappenteile 3 und 4 ergibt sich eine ausreichend große Fläche der Heckscheibe S im oberen Klappenteil 3, um eine gute Durchsicht in rückwärtiger Richtung zu gewährleisten. Die Scheibe S weist dabei eine mit einer bekannten, einteiligen Klappe vergleichbare Größe auf. Die Höhe des Fahrzeugs ist mit H bezeichnet.

Der obere Klappenteil 3 ist über ein Gelenkpunkt 5 unmittelbar, also direkt an der Karosserie K angelenkt. Der untere Klappenteil 4 ist über einen Schwenklenker 8 an einem Gelenkpunkt 6 an der Karosserie K gelagert. Der Schwenklenker 8 ist starr mit dem Klappenteil 4 verbunden und weist eine Knickstelle 9 auf. Damit ist der Klappenteil 4 über den Schwenklenker 8 mittelbar an der Karosserie K angelenkt. Der Schwenklenker 8 ist im oberen Endbereich an die untere Klappe 4 angebunden. Die Knickstelle 9 ist derart ausgelegt, dass sich die Knickstelle 9 bei geschlossener Klappenanordnung 1 in Fahrtrichtung F in nahezu der gleichen Längsposition befindet wie der Anlenkpunkt 6 des Schwenklenkers 8. Mit anderen Worten: Der Anlenkpunkt 6 liegt bei geschlossener Klappenanordnung 1 auf einer vertikalen Linie mit der Knickstelle 9. Ungefähr ein Drittel der Längserstreckung des Schwenklenkers 8 bildet die Verbindung von der Knickstelle 9 zum Anlenkpunkt 6, während die restlichen zwei Drittel der Längserstreckung des Schwenklenkers 8 die Knickstelle 9 mit der unteren Klappe 4 verbinden.

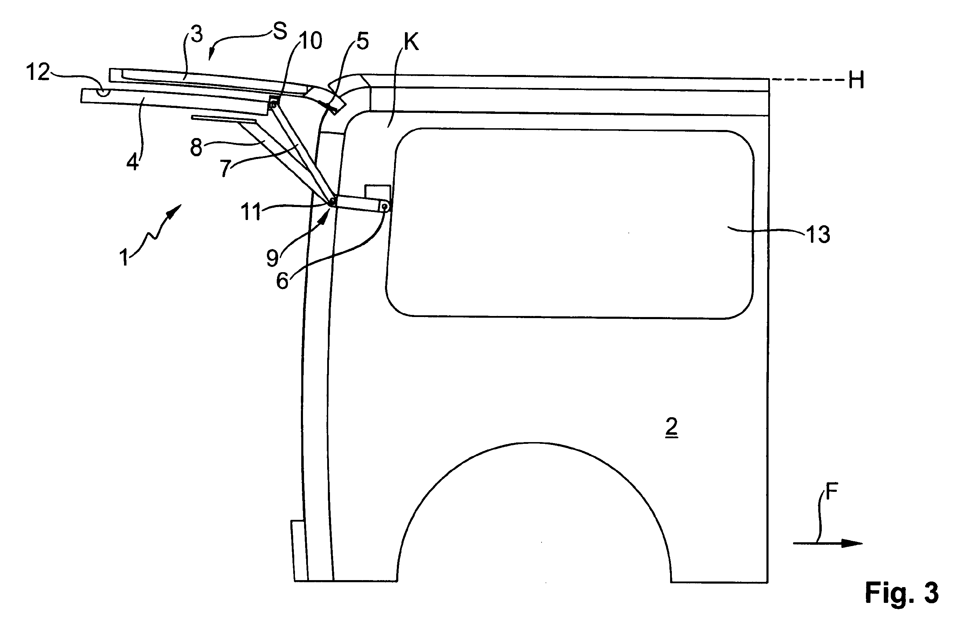

Die erfindungsgemäße Koppelung der beiden Klappenteile 3 und 4 erfolgt durch einen Verbindungslenker 7, der einerseits im Knickpunkt 9 mit dem Schwenklenker 8 einen Gelenkpunkt 11 ausbildet und andererseits über einen Gelenkpunkt 10 direkt mit der oberen Klappe 3 gelenkig verbunden ist. Der Gelenkpunkt 10 liegt dabei im oberen Viertel des oberen Klappenteils 3. Diese Position des Gelenkpunktes 10 in Bezug auf die obere Klappe 3 ist für die Lager der beiden Klappenteile 3 und 4 zueinander bei geöffnetem Klappensystem 1 relevant. Hierauf wird später im Rahmen der Erläuterungen zu Figur 3 eingegangen. Der Schwenklenker führt von der unteren Klappe 4 aus schräg nach oben bis zur Knickstelle 9, die gleichzeitig den Gelenkpunkt 11 ausbildet. Der Gelenkpunkt 11 liegt hierbei in Höhe des unteren Drittels der oberen Klappe 3. Der Verbindungslenker 7 ist als gerade Verbindungsstange ausgeführt.

Im unteren Bereich der unteren Klappe 4 ist zudem ein Betätigungselement 12 angedeutet, das im einfachsten Fall einen Handgriff darstellt, der zum einen die Klappenteile entriegelt und andererseits zur manuellen Krafteinleitung für die Öffnungsbewegung (und entsprechend für die Schließbewegung) dient. Die genannte Verriegelung der Klappenteile 3 und 4 gegenüber der Karosserie K ist in den Figuren nicht dargestellt, da diese dem Stand der Technik entsprechen und je nach Anforderungen des Fahrzeugherstellers ausgelegt werden können. Die Öffnungsbewegung kann zudem durch eine oder mehrere Gasdruckfedern (nicht gezeigt) unterstützt werden, wie sie ebenfalls aus dem Stand der Technik bekannt sind. Möglich sind sowohl Gasdruckfedern nur für einen wie auch für beide Klappenteile. Besonders geeignet ist die Anordnung der Gasdruckfedern nur an einem der Klappenelemente, da die Klappenteile über den Verbindungslenker 7 ohnehin zwangsgekoppelt sind und damit über den Verbindungslenker beide Klappenteile 3 und 4 gleichermaßen von der Gasdruckfeder unterstützt werden. Alternativ kann ein aktives Antriebssystem eingesetzt werden, das die Klappenteile 3 und 4 sowohl von der Karosserie K entriegelt als auch die Öffnungsbewegung (bzw. die Schließbewegung und des anschließende Verriegelung) automatisiert durchführt. Ein entsprechendes motorisches oder hydraulisches Antriebssystem (nicht gezeigt) ist aus dem Stand der Technik bekannt.

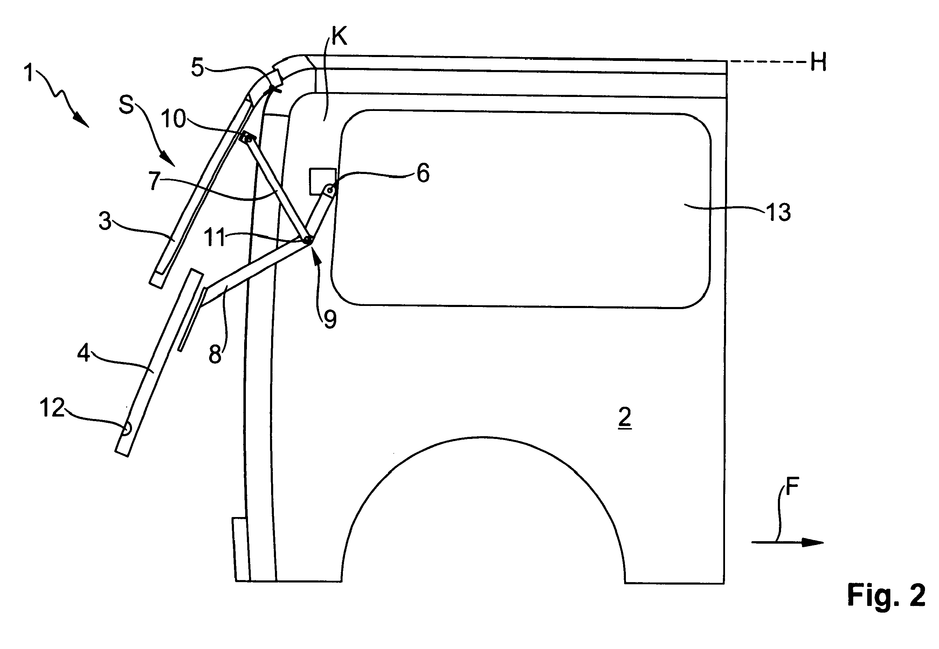

Figur 2 zeigt die zum Teil geöffnete Heckklappe 1, die durch eine Betätigung des Handgriffs 12 bewirkt wurde. Als unmittelbare Folge des Betätigung des Handgriffs 12 wird der untere Klappenteil 4 bewegt, der starr mit dem Schwenklenker 8 verbunden ist. Gleichzeitig wird über den Verbindungslenker 7 der obere Klappenteil 3 zwangsgesteuert mitbewegt (Drehung um karosseriefesten Gelenkpunkt 5). Durch den gleichzeitigen Beginn der Öffnungsbewegungen der beiden Klappenteile 4 und 5 wird der obere Klappenteil 3 in einer Art und Weise relativ zum unteren Klappenteil 4 verschwenkt, dass bei geschlossenen Klappenelementen 3 und 4 eine Dichtwirkung zischen den beiden Klappenteilen 3 und 4 erreicht werden kann. Mit anderen Worten: Die Dichtung ist so vorgesehen, dass sich zu Beginn der Öffnungsbewegung der obere Klappenteil 3 aus der Dichtung zum Klappenteil 4 herausbewegt, ohne dass es zu einer Kollision bzw. einem Verklemmen der Klappenteile 3 und 4 kommt.

Figur 3 zeigt schließlich die geöffnete Endlage der beiden Klappenelemente 3 und 4. Es ist erkennbar, dass die Oberkante der beiden Klappenelemente 3 und 4 in vertikaler Richtung im Bereich der Fahrzeughöhe H liegt. Damit ist die Heckklappe 1 auch dann öffnenbar, wenn sich - z.B. unter Lüftungsschächten in Tiefgaragen - fast kein Platz mehr oberhalb des Fahrzeugs 2 befindet. Der Überstand des geöffneten Heckklappenpaktes in rückwärtiger Richtung entspricht in etwa nur der hälfte einer üblichen einteiligen Heckklappe. Dieser geringe Überstand ermöglicht auch dann das Öffnen der Heckklappe 1, wenn sich in geringer Entfernung hinter dem Fahrzeug 2 eine Wand befindet. Auch unterhalb der geöffneten Heckklappenteile 3 und 4 ergibt sicht eine maximale lichte Höhe dadurch, dass die Klappenteile in einer sehr dichten Parallellage angeordnet sind. Dies ermöglicht auch für große Menschen ein nahezu ungebücktes Stehen unterhalb der geöffneten Heckklappe 1.

Im Vergleich zu bekannten Mehrgelenksystemen besteht durch die besonders einfach gehaltene Kinematik eine sehr robuste und stabile Anlenkung der Klappenteile 3 und 4 an der Karosserie K. Hierdurch ist auch in der geöffneten Parallellage der Klappenteile 3 und 4 sichergestellt, dass keine Kollisionsgefahr zwischen den Klappenteilen 3 und 4 besteht. In den Lenkern und den Gelenkpunkten ist so wenig Spiel vorhanden, dass der geringe Abstand zwischen den geöffneten Klappenteilen 3 und 4 gewahrt bleibt.

Im geöffneten Klappenzustand befindet sich die Knickstelle 9 des Schwenklenkers 8 mit dem Gelenkpunkt 11 auf gleicher Höhe wie der karosserieseitige Anlenkpunkt 6 des Schwenklenkers 8. Gleichzeitig befindet sich der zweite Gelenkpunkt 10 des Verbindungslenkers 7 auf gleicher Höhe wie der karosserieseitige Anlenkpunkt 5 des oberen Klappenteils 3. Das obere Ende des unteren Klappenteils 4 (bei geöffneter Klappe 4 der in Fahrtrichtung F vorderste Klappenteil) befindet sich bei geöffnetem Klappensystem 1 unmittelbar angrenzend an den Anlenkpunkt 10 des Verbindungslenkers 7 am oberen Klappenteil 3. Diese Anlenkpunkt 10 mit dem Verbindungslenker 7 begrenzt die Lage des unteren Klappenteils 4 im geöffneten Klappenzustand in Fahrzeuglängsrichtung, so dass bei in etwa gleich großen Klappenteilen 3 und 4 der untere Klappenteil 4 im geöffneten Klappenzustand heckwärts den oberen Klappenteil 3 überragt und damit die hintere Begrenzung des geöffneten Klappensystems darstellt. Es wäre als Alternative zum gezeigten Ausführungsbeispiel denkbar, den oberen Klappenteil 3 im Verhältnis zum unteren Klappenteil 4 länger auszuführen, um bei vollständig geöffnetem Klappensystem 1 den Überstand in rückwärtiger Richtung zu minimieren. Der minimale Überstand ergibt sich dann, wenn beide Klappenteile 3 und 4 im vollständig geöffneten Zustand an der gleichen hinteren Position enden, also sich am in Fahrzeuglängsrichtung hinteren Ende überdecken.

Als Alternative zu dem gezeigten Ausführungsbeispiel kann eine erfindungsgemäße Heckklappenanordnung auch bei einem Schrägheckfahrzeug oder einem Coupé zum Einsatz kommen. Es liegt ebenso im Rahmen der Erfindung, mehr als zwei Klappenteile vorzusehen, wobei genau zwei Klappenteile bereits die wesentlichen, gewünschten Vorteile erzielen. Je nach Auslegung ist möglich, den oberen Klappenteil 3 statt unmittelbar, mittelbar über einen zusätzlichen Schwenklenker an der Karosserie K anzulenken. Die erfindungsgemäße Verbindungsstange 7 kann an anderen Anbindungspunkten an die beiden Klappenteile 3 und 4 angebunden sein, als die im Ausführungsbeispiel vorhanden Gelenkpunkte 10 und 11.

## Patentansprüche

1. Heckklappe (1) für ein Kraftfahrzeug (2), die horizontal geteilt ist und wenigstens ein oberes (3) und ein unteres (4) Klappenteil aufweist, die im geschlossenen Zustand aneinander angrenzen,
wobei jedes der Klappenteile (3,4) mittelbar oder unmittelbar schwenkbar an dem Kraftfahrzeug (2) gehalten ist und jeweils um eine horizontale Schwenkachse (5,6) relativ zum Kraftfahrzeug (2) verlagerbar ist,
wobei die Klappenteile (3,4) gleichsinnig verlagerbar sind,
wobei die Klappenteile (3,4) in geöffneter Position nahezu parallel zueinander positioniert sind,
wobei die Klappenteile (3,4) derart gekoppelt sind, dass eine Bewegung eines Klappenteils (3,4) die Bewegung aller Klappenteile (3,4) bewirkt und wobei die Koppelung zwischen den Klappenteilen (3,4) wenigstens einen starren Verbindungslenker (7) umfasst, der wenigstens zwei Klappenteile (3,4) mittelbar oder unmittelbar gelenkig verbindet.

2. Heckklappe (1) nach Anspruch 1,
**dadurch gekennzeichnet,**
**dass** die Heckklappe (1) aus genau zwei nahezu senkrecht angeordneten Klappenteilen (3,4) besteht.

3. Heckklappe (1) nach Anspruch 1 oder 2,
**dadurch gekennzeichnet,**
**dass** die Klappenteile (3,4) unmittelbar oder mittelbar über einen starr mit dem jeweiligen Klappenteil (3,4) verbundenen Schwenklenker (8) gelenkig an dem Kraftfahrzeug (2) gelagert sind.

4. Heckklappe (1) nach Anspruch 3,
**dadurch gekennzeichnet,**
**dass** ein oberes Klappenteil (3) unmittelbar und ein unteres Klappenteil (4) über einen starr mit dem Klappenteil verbundenen Schwenklenker (8) an dem Kraftfahrzeug (2) gelagert ist und dass der Verbindungslenker (7) das obere Klappenteil (3) mit dem Schwenklenker (8) des unteren Klappenteils (4) gelenkig (10,11) koppelt.

5. Heckklappe (1) nach Anspruch 3 oder 4,
**dadurch gekennzeichnet,**
**dass** der Schwenklenker (8) in Richtung seiner Längserstreckung wenigstens eine Knickstelle (9) aufweist.

6. Heckklappe (1) nach Anspruch 5,
**dadurch gekennzeichnet,**
**dass** der Verbindungslenker (7) in der Knickstelle (9) angreift (11).

7. Heckklappe (1) nach einem der Ansprüche von 3 bis 6,
**dadurch gekennzeichnet,**
**dass** ein Anlenkpunkt (6) des Schwenklenkers (8) an dem Kraftfahrzeug (2) in Fahrtrichtung (F) vor einem Anlenkpunkt (5) eines unmittelbar am Kraftfahrzeug (2) angelenkten Klappenteils (3) angeordnet ist.

8. Heckklappe (1) nach einem der vorhergehenden Ansprüche, **dadurch gekennzeichnet,**
**dass** die Klappenteile (3,4) in der geöffneten Position eine nahezu horizontale Stellung in Höhe (H) einer oberen Begrenzung des Kraftfahrzeugs einnehmen.

9. Heckklappe (1) nach einem der vorhergehenden Ansprüche, **dadurch gekennzeichnet,**
**dass** an einem untersten Klappenelement (4) eine Betätigungsvorrichtung (12) vorgesehen ist, mittels der alle Klappenelemente (3,4) gleichzeitig öffnenbar und/oder schließbar sind.

10. Heckklappe (1) nach einem der vorhergehenden Ansprüche, **dadurch gekennzeichnet,**
**dass** zur Kraftunterstützung wenigstens eine Gasdruckfeder und/oder ein Antriebselement vorgesehen ist.

11. Heckklappe (1) nach einem der vorhergehenden Ansprüche, **dadurch gekennzeichnet,**
**dass** das obere Klappenteil (3) eine Scheibe (S) aufweist.
